## Europäisches Patentamt

## European Patent Office

## Office européen des brevets

(19)

(11) Veröffentlichungsnummer: **0 195 308**
**B1**

(12)
# EUROPÄISCHE PATENTSCHRIFT

(45) Veröffentlichungstag der Patentschrift:
**23.08.89**

(51) Int. Cl.⁴: **G 01 M 9/00**

(21) Anmeldenummer: **86102840.5**

(22) Anmeldetag: **04.03.86**

(54) **Modell-Heckstielwaage für aerodynamische Untersuchungen an Modellen im Windkanal.**

(30) Priorität: **13.03.85 DE 3508937**

(43) Veröffentlichungstag der Anmeldung:
**24.09.86 Patentblatt 86/39**

(45) Bekanntmachung des Hinweises auf die Patenterteilung:
**23.08.89 Patentblatt 89/34**

(84) Benannte Vertragsstaaten:
**FR GB NL SE**

(56) Entgegenhaltungen:
**DE-A-1 698 128
DE-A-2 624 647
US-A-2 700 305
US-A-4 372 158**

**ENGINEERING; Band 218, Nr. 9, September 1978,
Seiten 860-862; "Innovative control in Farnborough
5m wind tunnel"
TECHNISCHE RUNDSCHAU, Band 74, Nr. 1, Januar
1982, Seite 10 sowie Seiten 17, 18 in Nr. 2, Bern, CH;
ROLPH et al.: "Die Modell-Heckstielhalterung im
Deutsch- Niederländischen Windkanal"**

(73) Patentinhaber: **Deutsche Forschungs- und
Versuchsanstalt für Luft- und Raumfahrt e.V.,
D-5300 Bonn (DE)**

(72) Erfinder: **Pszolla, Hartmut, Dipl.- Ing.,
Sollingstrasse 2c, D-3400 Göttingen (DE)**
Erfinder: **Baumert, Werner, Dipl.- Ing., Am Ort 9,
D-3404 Adelebsen (DE)**
Erfinder: **Lorenz- Meyer, Wolfgang, Dr.- Ing.,
Sudetenlandstrasse 4, D-3400 Göttingen (DE)**

(74) Vertreter: **Patentanwälte Dipl.- Ing. Rudolf
Bibrach Dipl.- Ing. Elmar Rehberg, Postfach 3162
Am Kirschberge 22, D-3400 Göttingen (DE)**

**Beschreibung**

Die Erfindung bezieht sich auf eine Modell-Heckstielhalterung für aerodynamische Untersuchungen an Modellen im Windkanal mit einem mehrteiligen Träger, der auf einem Kreisbogen teleskopartig verschiebbar gelagerte Teile aufweist, von denen eines zur Aufnahme des Modells dient. Ein solches Gerät ist aus der DE-OS-1 698 128 bekannt. Bei der Durchführung von aerodynamischen Untersuchungen an Modellen im Windkanal muß das Modell relativ zum Windkanal positioniert und während der Messung gehalten werden. Weiterhin müssen die am Modell auftretenden Kräfte gemessen werden, wozu in der Regel Waage dient.

Bei der aus der DE-OS-1 698 128 bekannten Heckstielhalterung weist der obere Teil des Trägers an seinem lagerseitigen Ende einen Wagen auf, der mit seinen Rollen in kreisbogenförmigen, in einem Tragrahmen angeordneten Schienen läuft. Dabei werden die Teile des Trägers gegeneinander durch einen von einem Elektromotor angetriebenen Spindeltrieb verstellt. Bedingt durch ihre Bauart und die Verwendung der beschriebenen Lager ist die bekannte Modell-Heckstielhalterung für viele Anwendungsfälle nicht steif genug. Auch das Lager- und Antriebsspiel der Verstelleinheiten führt zu Fehlinterpretationen der Lage des Modells im Windkanal einerseits sowie der auftretenden Kräfte und Bewegungen andererseits. Bei Messungen im Windkanal wird das Modell durch Ablösung der Strömung zu selbsterregten Schwingungen angeregt. Die geringe Steifigkeit des Trägers führt bei ungünstiger Anordnung zu einer Verstärkung dieser Schwingungen infolge Auftretens von Resonanzerscheinungen. Die Schwingungen des Modells wiederum stören den Verlauf der Umströmung des Modells im Windkanal. Hierdurch entsteht bei solchen aerodynamischen Untersuchungen ein Fehler unbekannter Größe. Bei ungünstigen Anordnungen kann der Fehler die gleiche Größenordnung wie das Meßergebnis aufweisen, so daß eine ordnungsgemäße, aussagekräftige Messung nicht mehr möglich ist. Mit der bekannten Modell-Heckstielhalterung ist es nicht möglich, statische Messungen an schwingungsfreien Modellen durchzuführen. Die Messungen können allenfalls als quasistatisch bezeichnet werden, wodurch die Meßergebnisse mit mehr oder weniger Fehlern behaftet sind. Ein Regelvorgang ist mit dieser Modell-Hecksteilhalterung nicht möglich.

Weiterhin ist aus der Druckschrift Construction 1976 - 1980 M. Seidel, ed., Deutsch-Niederländischer Windkanal, Noordoostpolder, 1982 Seite 85 - 91 eine Modell-Heckstielhalterung bekannt, bei der servohydraulische Antriebe Verwendung finden. Die hydraulischen Antriebe dienen hauptsächlich der Bewältigung der beim Deutsch-Niederländischen Windkanal auftretenden, besonders großen Modellgewichte von max. 2 Tonnen in Verbindung mit der geforderten Genauigkeit. Mit dieser Modell-Heckstielhalterung ist weder das Aufbringen von Antiresonanzen noch ein Regelvorgang möglich, vielmehr ist lediglich eine Steuerung vorgesehen.

Die DE-OS-2 624 647 zeigt eine Vorrichtung zum Messen mehrerer Kraftkomponenten, bei der das Modell von einem Träger gehalten wird. Der Träger ist mittels Druckflüssigkeitslager derart gelagert, daß die durch die Umströmung des Modells auftretenden Kräfte über den Träger auf Kraftaufnehmer eingeleitet werden. Auch hier ist wiederum weder ein Regelvorgang noch das Aufbringen von Antiresonanzen möglich.

Der Erfindung liegt die Aufgabe zugrunde, eine Modell-Heckstielhalterung der eingangs beschriebenen Art so weiterzubilden, daß es möglich ist, Antiresonanzen auf das Modell zu übertragen, die den selbsterregten Schwingungen am Modell entgegengerichtet sind, so daß letztendlich das Modell von der Modell-Heckstielhalterung im Windkanal ruhig bzw. weitgehend schwingungsfrei gehalten wird. Auf diese Art und Weise sollen statische Messungen möglichst fehlerfrei ermöglicht werden. Andererseits sollen auch dynamische Messungen durchführbar sein, bei denen also dem Modell über der Modell-Heckstielhalterung ein vorgegebener Bewegungsablauf aufgeprägt wird. Auf diese Art und Weise sollen Manöver von Flugzeugen, Raketen oder Kraftfahrzeugen im Windkanal durchführbar und meßtechnisch erfaßbar werden.

Erfindungsgemäß wird dies dadurch erreicht, daß für die Bewegung bzw. Einstellung der einzelnen Teile des Trägers hydraulische Dreh- oder Linearzylinder vorgesehen sind, daß das Modell mit einem Schwingungsaufnehmer versehen ist, dem eine Auswerte- und Steuereinrichtung sowie ein jedem Zylinder vorgeschaltetes Regelventil zur Aufbringung von Antiresonanzen auf das Modell zugeordnet sind, und daß die Teile des Trägers über Druckflüssigkeitslager aneinander gelagert sind.

Die Verwendung von Druckflüssigkeitslagern anstelle von Gleit- oder Rollenlagern erbringt eine wesentlich höhere Steifigkeit der Modell-Heckstielhalterung, die erforderlich ist, um andererseits durch die aufgebrachten Antiresonanzen Modellruhe zu erzielen. Der Modell-Hecksteilhalterung werden über die hydraulischen Dreh- oder Linearzylinder exakt definierte Modellschwingungen aufgeprägt, die mit den durch die Umströmung aufgebrachten Schwingungen in Antiresonanz stehen, so daß sich das Modell letztlich ruhig einstellt. Auch die Messung von instationären Kräften wird hierdurch möglich. Es versteht sich, daß der Modell-Heckstielhalterung exakt definierte Modellschwingungen aufgeprägt werden. Die vorhandenen Möglichkeiten beinhalten Roll-, Nick-, Gier- und Senkschwingungen.

Bei diesen Schwingungen kann also je nach Bedarf die Amplitude, Frequenz und die Funktion selbst verändert werden. Durch die erfindungsgemäße Ausbildung der Modell-Heckstielhalterung ist es möglich, Manövereigenschaften von Flugzeugen, Raketen, Kraftfahrzeugen und dgl. bei größtmöglicher Steifheit der Modell-Heckstielhalterung im Windkanal zu simulieren. Dabei können die Bewegungsabläufe also vorher bestimmt und festgelegt werden, so daß die während eines Manövers in bekannter Weise ablaufen. Die Bewegungsabläufe können auch schrittweise nacheinander vollzogen werden. Die Druckflüssigkeitslager bringen eine wesentlich verbesserte Steifigkeit des Trägers. Diese Lager arbeiten praktisch spiel- und verschleißfrei und besitzen eine hohe Einstellgenauigkeit. Das im Druckflüssigkeitslager enthaltene Ölpolster verhindert die Übertragung von Körperschall auf das Modell. Auch Körperschall kann über die Meßelemente der Waage im Modell und die Aerodynamik des Modells zu fehlerhaften Meßergebnissen führen. Es versteht sich, daß zu jedem Druckflüssigkeitslager eine Druckquelle bzw. ein Anschluß zu einer Druckquelle gehört, damit über das elektro-hydraulische Regelventil die betreffenden Zylinder betätigt werden können, sei es ein Linearzylinder oder ein Drehzylinder, je nachdem um welche Bewegung es sich handelt.

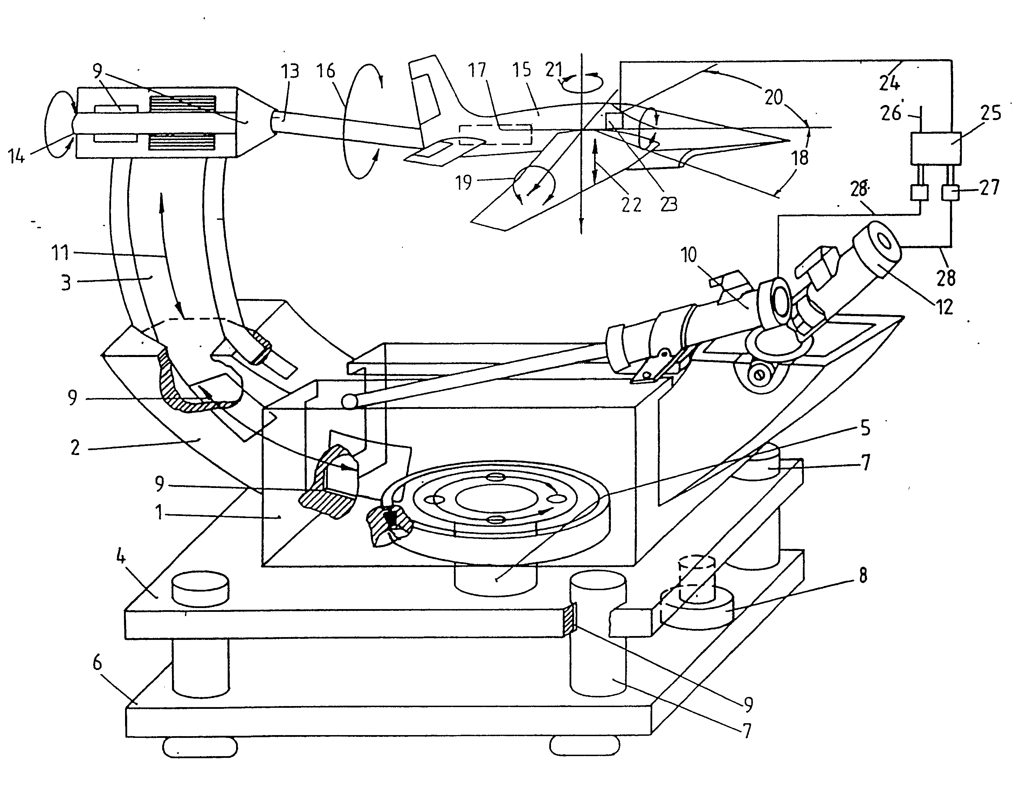

Die Erfindung wird anhand eines Ausführungsbeispieles weiter beschrieben. In der Zeichnung ist eine schematische Darstellung der Modell-Heckstielhalterung wiedergegeben:

Wesentliche Bestandteile des Trägers sind drei Teile 1, 2, 3, die teleskopisch ineinander verschiebbar gelagert sind. Der Teil 1 ist unverschieblich jedoch drehbar um eine Vertikalachse auf einer Aufnahmeplatte 4 gelagert. Die Lagerung umfaßt eine Schwalbenschwanzführung und einen Drehzylinder 5. Die Aufnahmeplatte 4 ist ihrerseits auf einer Grundplatte 6 mit Hilfe von Säulen 7 vertikal gelagert. Für die Einsteuerung der Vertikalbewegung ist ein oder mehrere Linearzylinder 8 vorgesehen. Die beschriebenen Teile sind vermittels Druckflüssigkeitslager 9 - je in spezieller Ausbildung - geführt und gehalten, so daß sie sich entsprechend gegeneinander bewegen können. Das Teil 1 des Trägers kann somit nur eine Drehbewegung ausführen. Das Teil 2 ist jedoch bereits in dem Teil 1 auf einem Halbkreisbogen verschiebbar gelagert. Hierzu dient ein Linearzylinder 10, dessen Kolbenstange durch einen Schlitz im Teil 1 hindurchgreift und an dem Teil 2 angelenkt ist. In dem Teil 2 bewegt sich der Teil 3 entsprechend dem Pfeil 11. Über einen Linearzylinder 12 ist diese Bewegung steuerbar.

Am freien Ende des Teiles 3 des Trägers ist ein Heckstiel 13 ebenfals mit Hilfe eines Druckflüssigkeitslagers 9 drehbar gelagert. Für den Drehantrieb des Heckstiels 13 relativ zu dem Teil 3 des Trägers ist ein Drehzylinder 14 vorgesehen. Mit Hilfe dieses Drehzylinders 14 kann der Heckstiel 13 um seine Längsachse gedreht werden, was einer Rollbewegung des Modells 15 entspricht, also eine Bewegung gemäß Pfeil 16. Das Modell 15 ist unter Zwischenschaltung einer Waage 17 an den Heickstiel 13 befestigt und aufgehängt. Es kann in den verschiedenen Raumrichtungen eingestellt, positioniert und verstellt werden. Durch Verstellung der Linearzylinder 10, 12 wird der Anstellwinkel 18 eingestellt bzw. verstellt, was einer Nickbewegung gemäß Pfeil 19 entspricht. Eine Verstellung des Drehzylinders 5 führt zur Einstellung des Schiebewinkels 20, also einer Gierbewegung gemäß Pfeil 21. Über den Linearzylinder 8 wird die Höhe des Modells gemäß Pfeil 22 eingestellt.

Auf dem Modell 15 bzw. in dem Modell sind ein oder mehrere Schwingungsaufnehmer 23 angeordnet, die die Aufgabe haben, infolge der Umströmung des Modells auftretende und erregte Schwingungen am Modell festzustellen. Über eine schematisch dargestellte Leitung 24 werden die Meßimpulse an eine Auswerte- und Steuereinrichtung 25 gegeben. Diese im allgemeinen elektronisch ausgebildete Einrichtung besitzt darüber hinaus einen Anschluß 26 für eine von einer Hydraulikquelle, einer Pumpe oder dgl. herangeführten Leitung. Hydraulische sowie elektrische Leitungen führen von der Auswerte- und Steuereinrichtung 25 zu Regelventilen 27, von denen nur zwei dargestellt sind. Es versteht sich, daß für jeden der Drehzylinder 5, 14 sowie die Linearzylinder 8, 10, 12 je ein Regelventil 27 vorgesehen ist. Über entsprechende Leitungen 28 werden die betreffenden Zylinder 5, 8, 10, 12, 14 mit Hydraulikflüssigkeit versorgt bzw. gesteuert. Über die beschriebene Einrichtung ist es möglich, die von der Umströmung des Modells 15 am Modell auftretenden Schwingungen mit den Schwingungsaufnehmern 23 zu messen und zu analysieren und sodann die Resonanzen auszusteuern, d.h. über eine entsprechende Betätigung der Regelventile 27 gezielt solche Antiresonanzen an dem Modell 15 zu erzeugen, daß sich die beiden Schwingungen gegenseitig aufheben und das Modell 15 in Ruhe steht. Dies ist der Fall, wenn stationäre Messungen durchgeführt werden sollen. Es ist aber auch möglich, instationäre Messungen durchzuführen, also die Zylinder 5, 8, 10, 12, 14 in einem bestimmten Bewegungsablauf, der über einen Prozeßrechner als Bestandteil der Auswerte- und Steuereinrichtung 25 gesteuert werden kann, zu betätigen. Auf diese Weise vollführt das Modell 15 ein bestimmtes Manöver und mit Hilfe der Waage 17 können die entsprechenden Kräfte und Belastungen gemessen werden.

**Bezygszeichenliste**

1 = Teil
2 = Teil
3 = Teil
4 = Aufnahmeplatte
5 = Drehzylinder
6 = Grundplatte
7 = Säule
8 = Linearzylinder
9 = Druckflüssigkeitslager
10 = Linearzylinder

11 = Pfeil
12 = Linearzylinder
13 = Heckstiel
14 = Drehzylinder
15 = Modell
16 = Pfeil
17 = Waage
18 = Anstellwinkel
19 = Pfeil
20 = Schiebewinkel
21 = Pfeil
22 = Pfeil
23 = Schwingungsaufnehmer
24 = Leitung
25 = Auswerte- und Steuereinrichtung
26 = Anschluß
27 = Regelventil
28 = Leitung

**Patentanspruch**

Modell-Heckstielhalterung für aerodynamische Untersuchungen an Modellen im Windkanal mit einem mehrteiligen Träger, der auf einem Kreisbogen teleskopartig verschiebbar gelagerte Teile aufweist, von denen eines zur Aufnahme des Modells dient, dadurch gekennzeichnet, daß für die Bewegung bzw. Einstellung der einzelnen Teile des Trägers hydraulische Dreh- oder Linearzylinder (5, 8, 10,12, 14) vorgesehen sind, daß das Modell (15) mit einem Schwingungsaufnehmer (23) versehen ist, dem eine Auswerte- und Steuereinrichtung (25) sowie ein jedem Zylinder vorgeschaltetes Regelventil (26) zur Aufbringung von Antiresonanzen auf das Modell (15) zugeordnet sind, und daß die Teile des Trägers über Druckflüssigkeitslager (9) aneinander gelagert sind.

**Claim**

Holder for the rear stalk of a model for aerodynamic investigations on models in a wind tunnel, comprising a multi-part support, which has parts mounted telescopically displaceably on a circular arc, of which one serves to accommodate the model, characterized in that hydraulic rotary cylinders or linear cylinders (5, 8, 10, 12, 14) are provided for moving or setting the individual parts of the support, in that the model (15) is provided with a vibration pick-up (23), to which are assigned an evaluation and control device (25) and a control valve (26) connected upstream of each cylinder for the purpose of applying antiresonances to the model (15), and in that the parts of the support are mounted next to one another by means of hydraulic fluid bearings (9).

**Revendication**

Support de mât de queue de modèle pour études aérodynamiques de modèles en soufflerie, avec un élément porteur en plusieurs parties, cet élément présentant des parties montées coulissantes de manière télescopique selon un arc de cercle, une de ces parties servant à recevoir le modèle, caractérisé en ce que des vérins hydrauliques rotatifs ou linéaires (5, 8, 10, 12, 14) sont prévus pour la mise en mouvement et le réglage des diverses parties, en ce que le modèle (15) est pourvu d'un capteur de vibrations (23) auquel sont associés un système (25) d'analyse et de conduite, ainsi qu'une vanne de réglage disposée en amont de chaque vérin pour appliquer des anti-résonances au modèle (15), et en ce que les parties du support sont montées l'une dans l'autre au moyen de glissières (9) à pression fluide.

EP 0 195 308 B1